Europäisches Patentamt

**European Patent Office**

Office européen des brevets

(19)

(11) Publication number: **0 015 125**

**A1**

(12) # EUROPEAN PATENT APPLICATION

(21) Application number: **80300441.5**

(22) Date of filing: **15.02.80**

(51) Int. Cl.³: **C 08 J 7/18**
//(C08J7/18, C08L25/16)

(30) Priority: **21.02.79 US 13639**

(43) Date of publication of application:
**03.09.80 Bulletin 80/18**

(84) Designated Contracting States:
**BE DE FR GB IT NL**

(71) Applicant: **MOBIL OIL CORPORATION**
**150 East 42nd Street**
**New York New York 10017(US)**

(72) Inventor: **Arbit, Harold Abraham**
**35 North 6th Avenue Highland Park**
**New Jersey 08904 Middlesex(US)**

(74) Representative: **Cooper, John Anthony**
**Mobil Court 3 Clements Inn**
**London WC2A 2EB(GB)**

(54) **Process for improving films of poly(p-methylstyrene) and copolymers.**

(57) A method for improving properties of thermoplastic films by irradiating films of poly(p-methylstyrene) of p-methylstyrene copolymers with acrylonitrile, or of high impact poly (p-methylstyrene) with ionizing radiation at a dosage from 30 to 70 megarads (preferably from 40 to 60 megarads). The irradiated films are heat resistant and have increased tensile properties at elevated temperatures.

## PROCESS FOR IMPROVING FILMS OF
## POLY(P-METHYLSTYRENE) AND COPOLYMERS

This invention is directed to improving the properties of films of p-methylstyrene polymers by irradiation.

This invention provides a method for improving properties of thermoplastic films by irradiating films of polymers of p-methylstyrene (homopolymers, copolymers with acrylonitrile, or high impact poly (p-methylstyrene) with ionizing radiation at a dosage from 30 to 70 megarads, preferably 40 to 60 megarads). The irradiated films are heat resistant and have increased tensile properties at elevated temperatures.

The monomer used in preparing the homopolymer or copolymers from which the films are prepared is p-methylstyrene, either alone or in mixtures of methylstyrene rich in the p-methylstyrene isomer. Such mixtures contain at least 95 weight percent preferably 97-99 weight percent p-methylstyrene and less than 0.1 weight percent o-methylstyrene with the balance being m-methylstyrene. A typical mixture contains,by weight 95 percent p-methylstyrene 5 percent m-methylstyrene and about 0.05 percent o-methylstyrene. The mixtures may be obtained by the catalytic dehydrogenation of the mixtures of ethylmethyl benzene isomers described in U.S. Patent No. 4,086,287. Polymers of p-methystyrene are also described in our European Patent Application No. 79300076.1 (Publication No. 3639).

The polymers which may be used in the present method are homopolymers of p-methylstyrene or p-methylstyrene-rich isomer mixtures, their copolymers with acrylonitrile (which are analogous to the well known styrene-acrylonitrile copolymers, typically containing 70% styrene and about 30% acrylonitrile) and high impact polymers. The polymerization reaction is carried out by using methods and catalysts well known in the art for polymerizing styrene. The reaction can be carried out in solution, bulk, suspension, or emulsion, as described in European Application Publication No. 3639.

The films of these polymers can be produced by any of the well known methods for producing films, such as by casting, blowing, and slot extrusion.

The films of the p-methylstyrene polymers are irradiated, i.e., subjected to ionizing radiation. Ionizing radiation which may be used includes extremely short-wavelength, highly energetic, penetrating rays such as gamma rays, X-rays, and subatomic particles accelerated in cyclotrons, betatrons synchrotrons, and linear accelerators. The effect of irradiating the film is to cross-link the polymer. The irradiation dose can be between 30 megarads and 70 megarads, preferably between 40 megarads and 60 megarads.

### EXAMPLE 1

Poly(p-methylstyrene) (PPMS) was dissolved in toluene at room temperature to form a 25 weight percent solution. The solution was cast with a Gardner film applicator onto a polyethylene terephthalate release sheet. The solvent was evaporated in a 115°C. vacuum oven for about one hour to yield 50 micron films at constant weight. Samples of the films were irradiated at different megarad dose levels with an electron beam at 150kV and 3mA. Crosslinking was determined by placing a sample in toluene at room temperature overnight. Any insoluble gel was filtered and dried to constant weight 115°C. The degree of crosslinking was measured as the weight percent gel formed. Pertinent data are set forth in Table I, together with data for irradiated polystyrene film.

Samples of the poly (p-methylstyrene), non-irradiated and irradiated at 50 megarads, were tested for tensile properties (ASTM-D638) at 110°C. The results are set forth in Table II.

<div align="center">Table I</div>

| Dosage, Megarads | % Crosslinking | |
|---|---|---|
| | PPMS | PS |
| 0 | 0 | 0 |
| 20 | 1.0 | 0 |
| 22 | 21.4 | 0 |
| 24 | 38.7 | 0 |
| 26 | 28.3 | 0 |
| 28 | 45.8 | 0 |
| 30 | 81.6 | 0 |
| 40 | 89.6 | 0 |
| 50 | 79.3 | 0 |
| 60 | 90.2 | 0 |

<div align="center">Table II</div>

| Test, units | Megarad Dosage | |
|---|---|---|
| | 0 | 50 |
| Tangent Modulus, kPa x $10^{-4}$ @ 110°C. | 2.75 | 43.41 |
| Yield Strength, kPa x $10^{-2}$ @ 110°C. | 2.75 | 40.65 |
| Ultimate Strength, kPa x $10^{-2}$ @ 110°C. | 4.13 | 19.9 |
| Break Elongation, % @ 110°C. | >128 | 77 |

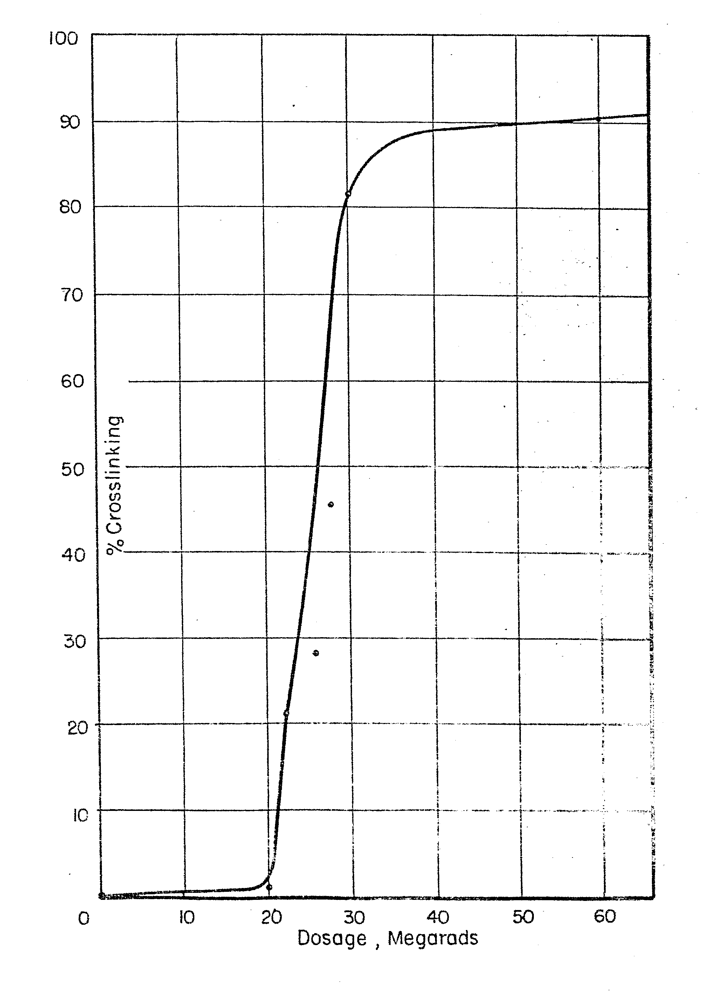

The drawing presents a curve, based upon the data set forth in Table I, showing the relationship between the percent of crosslinking of PPMS and irradiation dosage in megarads. It will be noted that a high degree of crosslinking is effected at a dosage of between 30 megarads and 70 megarads. Polystyrene is not crosslinked under these conditions.

From the data set forth in Table II, it will be noted that the high temperature (110°C.) tensile properties of PPMS films, non-irradiated, were improved by irradiation at 50 megarads. Thus a 15-fold increase in modulus and yield was obtained over the non-irradiated control.

## Example 2

p-Methylstyrene-acrylonitrile copolymer (PMSAN) containing about 70 percent p-methylstyrene was pressed into films having thicknesses of 125 to 140 microns. Samples were irradiated at 50 megarads. Similarly, films of the same thickness were prepared from styrene-acrylonitrile copolymer (SAN) 70 percent styrene and samples were irradiated at 50 megarads. The amount of crosslinking was determined for the specimens, using the procedure described in Example 1. Pertinent results are set forth in Table III.

### Table III

| Polymer | % Crosslinking @ | |
| --- | --- | --- |
| | 0 Megarad | 50 Megarads |
| PMSAN | 0 | 88.7 |
| SAN | 0 | 0 |

From the data set forth in Table III, it will be noted that, like PPMS, the PMSAN can be crosslinked by irradiation. SAN, on the other hand, is not crosslinked at 50 megarads.

## Example 3

Films were prepared from high impact polystyrene (HIPS) and from high impact poly (p-methylstyrene) (HIPMS), each containing about 5 weight percent butadiene rubber, by pressing 75 to 100 micron films from 625 micron sheet. Some of the films of each type were irradiated at 50 megarads and degree of crosslinking of non-irradiated and irradiated films was determined, as described in Example 1. The pertinent data are set forth in Table IV.

Table IV

| Polymer | % Crosslinking @ | |
|---------|------------------|------------------|
|         | 0 Megarad        | 50 Megarads      |
| HIPMS   | <1               | 89.3             |
| HIPS    | 0                | 0                |

From the data set forth in Table IV, it will be noted that HIPMS, like PPMS, can be crosslinked by irradiation. HIPS, on the other hand, is not crosslinked at 50 megarads.

WHAT IS CLAIMED IS:

1.  A method for improving properties of thermoplastic films which comprises irradiating films of poly (p-methylstyrene), of p-methylstyrene copolymers with acrylonitrile, or of high impact poly (p-methylstyrene) with ionizing radiation at a dosage from 30 to 70 megarads.

2.  The method of Claim 1, wherein said dosage is from 40 to 60 megarads

3.  A method according to Claim 1 or 2 in which the film is a film of p-methylstyrene-acrylonitrile copolymer containing about 70 percent p-methylstyrene.

4.  A method according to Claim 1 or 2 in which the film is a film of high impact poly(p-methylstyrene).

0015125

European Patent
Office

**EUROPEAN SEARCH REPORT**

Application number

EP 80300441.5

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | CH - A - 380 373 (DU PONT) | 1,2 | C 08 J 7/18 |
| | + Totality + | | //( C 08 J 7/18 |
| | -- | | C 08 L 25/16) |
| | DP - A - 94 497 (SCHILLER) | 1 | |
| | + Totality + | | |
| | ---- | | |
| | | | **TECHNICAL FIELDS SEARCHED (Int.Cl. 3)** |
| | | | C 08 J |
| | | | **CATEGORY OF CITED DOCUMENTS** |
| | | | X: particularly relevant |
| | | | A: technological background |
| | | | O: non-written disclosure |
| | | | P: intermediate document |
| | | | T: theory or principle underlying the invention |
| | | | E: conflicting application |
| | | | D: document cited in the application |
| | | | L: citation for other reasons |
| X | The present search report has been drawn up for all claims | | &: member of the same patent family, corresponding document |

| Place of search | Date of completion of the search | Examiner |
|---|---|---|
| VIENNA | 29-04-1980 | WEIGERSTORFER |

EPO Form 1503.1  06.78